# EUROPEAN PATENT APPLICATION

(11) **EP 4 631 711 A1**
(43) Date of publication of application: **15.10.2025**
(21) Application number: 23899191.3
(22) Date of filing: 16.01.2023
(51) Int. Cl.: B31B 70/64, B32B 27/08

(54) **PROCESS METHOD AND DEVICE FOR MAKING BAG BY PREHEATING COMPOSITE FILM**

(30) Priority: 09.12.2022 CN 202211588731
(71) Applicant: Sinomech Corporation, Guangzhou, Guangdong 510830 (CN)
(72) Inventor: ZUO, Guangshen, Guangzhou, Guangdong 510830 (CN); HUANG, Shunli, Guangzhou, Guangdong 510830 (CN)
(74) Representative: Metida
(86) International application number: PCT/CN2023/072448
(87) International publication number: WO 2024/119590

(57) **Abstract**

Provided are a process and device for marking a bag based on preheating laminated films. The process includes a preheating operation and a heat-sealing operation for combining a first laminated film and a second laminated film. The preheating operation is set before the heat-sealing operation. The process includes the steps of parameter determination, preheating, conveying, and forming. After a first heat-seal layer and a second heat-seal layer are preheated by a first preheating assembly and a second preheating assembly respectively, the first laminated film and the second laminated film are delivered by a conveying assembly to a first heating assembly and a second heating assembly respectively, and then heated by the first heating assembly and the second heating assembly respectively. This process avoids the low heat transfer efficiency and the difficult improvement of production efficiency caused by the indirect heating of the first heat-seal layer and the second heat-seal layer by the first heating assembly and the second heating assembly.

## Description

### TECHNICAL FIELD

The present disclosure relates to the field of laminated film bag-making machines, and particularly relates to a process and device for marking a bag based on preheating laminated films.

### BACKGROUND

The process for making a bag using laminated films is a technique for producing a flexible packaging with a plastic film + a plastic film or paper + a plastic film. In the existing process for making a laminated film bag, the operation responsible for heat sealing typically includes pressing, heat transferring, temperature rising, and heat sealing that are conducted sequentially in one go. A laminated film includes an outer surface layer and an inner heat-seal layer. During the production by the conventional process, the heating of a heat-seal layer requires the heat transmission by a surface layer. However, this indirect heating mode involves long-time temperature rise, making it difficult to improve the production efficiency.

### SUMMARY

In view of this, the present disclosure provides a process and device for marking a bag based on preheating laminated films, which can enhance the production efficiency.

The present disclosure adopts the following technical solutions: A process for marking a bag based on preheating laminated films is provided, including a preheating operation and a heat-sealing operation that are used for combining a first laminated film and a second laminated film, where the preheating operation is set before the heat-sealing operation; a first preheating assembly and a second preheating assembly are provided between conveying paths of the first laminated film and the second laminated film in the preheating operation; and in the preheating operation, heat-seal layers on inner surfaces of the first laminated film and the second laminated film are preheated by the first preheating assembly and the second preheating assembly respectively to raise initial temperatures of the first laminated film and the second laminated film in the heat-sealing operation; and the process includes the following steps:
parameter determination: determining a first preheating temperature T1 based on a material of a first heat-seal layer of the first laminated film, and determining a second preheating temperature T2 based on a material of a second heat-seal layer of the second laminated film; and determining a first heating temperature T5 based on a material of a first surface layer of the first laminated film and a total thickness of the first laminated film, and determining a second heating temperature T6 based on a material of a second surface layer of the second laminated film and a total thickness of the second laminated film, where when the first preheating temperature T1 and the second preheating temperature T2 are applied, neither the first heat-seal layer nor the second heat-seal layer undergoes melting;
preheating: in the preheating operation, heating the first heat-seal layer by the first preheating assembly to the first preheating temperature T1, and heating the second heat-seal layer by the second preheating assembly to the second preheating temperature T2;
conveying: driving the first laminated film and the second laminated film by a conveying assembly to proceed to a position of the heat-sealing operation, and making the first laminated film and the second laminated film attach to each other under an action of the conveying assembly; and
forming: in the heat-sealing operation, with initial temperatures of the first heat-seal layer and the second heat-seal layer that attach to each other as a first heat-sealing initial temperature T3 and a second heat-sealing initial temperature T4 respectively, heating the first heat-seal layer and the second heat-seal layer by a first heating assembly and a second heating assembly to a first target temperature T7 and a second target temperature T8 respectively, and subjecting the first laminated film and the second laminated film to heat sealing under a pressure.

Optionally, between the parameter determination step and the preheating step, the process further includes the following step:
sample trial: under current temperature parameters, a current operating speed v1 of the conveying assembly, a heat transfer time t1 of the first heating assembly for the first laminated film, and a heat transfer time t2 of the second heating assembly for the second laminated film, conducting the sample trial.

Optionally, between the sample trial step and the preheating step, the process further includes the following step:
parameter adjustment: according to a mechanical speed permitted range, increasing an operating speed of the conveying assembly according to the following formula:
   v2 = v1 + △v, where v2 is an operating speed of the conveying assembly after an adjustment, v1 is an operating speed of the conveying assembly before the adjustment, and △v is a speed increment per adjustment; after the adjustment, testing a heat-sealing strength and an appearance quality of a sample; if both the heat-sealing strength and the appearance quality meet desired standards, assigning v2 to v1, and conducting one or more adjustment cycles;
if the heat-sealing strength or the appearance quality does not meet the desired standard, raising the first preheating temperature T1 and the second preheating temperature T2 such that the first heat-sealing initial temperature T3 and the second heat-sealing initial temperature T4 are raised to improve the heat-sealing strength and the appearance quality, and adjusting the operating speed of the conveying assembly to obtain a maximum value of v1; and
if a heat-seal layer adhesion phenomenon occurs during conveying after raising the first preheating temperature T1 and the second preheating temperature T2, taking values of T1, T2, and v1 before the adjustment.

Optionally, an initial value of the first preheating temperature T1 is set as T1 = X1 * T9 and an initial value of the second preheating temperature T2 is set as T2 = Y1 * T10, where values of X1 and Y1 both are in a range of 0.75 to 0.85, and T9 and T10 are melting temperatures of the materials of the first heat-seal layer and the second heat-seal layer respectively; and the first target temperature T7 is X2 * T9 and the second target temperature T8 is Y2 * T10, where values of X2 and Y2 both are in a range of 0.85 to 1.05.

Optionally, between the parameter determination step and the preheating step, the process further includes:
the first heating assembly including a first supplemental heating source and a first sealing bar, and the second heating assembly including a second supplemental heating source and a second sealing bar; determining a temperature T11 of the first sealing bar based on the material of the first surface layer, and determining a temperature T12 of the second sealing bar based on the material of the second surface layer; and determining correction values △T5 and △T6 for the first sealing bar and the second sealing bar based on the total thickness of the first laminated film and the total thickness of the second laminated film respectively, where a set temperature for the first sealing bar is the first heating temperature T5, and T5 = T11 + △T5; and a set temperature for the second sealing bar is the second heating temperature T6, and T6 = T12 + △T6.

Optionally, an initial operating speed v1 of the conveying assembly is negatively correlated with a bag length and a multiplication distance.

Optionally, the first preheating temperature T1 and the second preheating temperature T2 are automatically controlled in one of the following three modes:
mode 1: the first preheating temperature T1, the second preheating temperature T2, the first heating temperature T5, and the second heating temperature T6 are controlled independently;
mode 2: the first preheating temperature T1 and the first heating temperature T5 are controlled in a coordinated manner, and the second preheating temperature T2 and the second heating temperature T6 are controlled in a coordinated manner; and
mode 3: the first preheating temperature T1, the second preheating temperature T2, the first heating temperature T5, and the second heating temperature T6 are all controlled in a coordinated manner.

The present disclosure provides a device for marking a bag based on preheating laminated films, including the first preheating assembly, the second preheating assembly, the first heating assembly, the second heating assembly, and the conveying assembly described above, where a first laminated film and a second laminated film each are provided with a separation section, a transition section, and a sealing section sequentially along an extending direction of an advancing direction of the conveying assembly;
the first preheating assembly is arranged at a separation section of the first laminated film, and the second preheating assembly is arranged at a separation section of the second laminated film; and the first heating assembly is arranged at a side of a sealing section of a first surface layer of the first laminated film that is away from a first heat-seal layer, and the second heating assembly is arranged at a side of a sealing section of a second surface layer of the second laminated film that is away from a second heat-seal layer.

Optionally, the conveying assembly includes at least two first rollers and at least two second rollers; the at least two first rollers are arranged at opposite sides (i.e., facing each other) of the separation sections of the first laminated film and the second laminated film respectively; and the at least two second rollers are arranged at outer sides of transition sections of the first surface layer and the second surface layer respectively.

Compared with the prior art, the implementation of the embodiments of the present disclosure has the following beneficial effects:
In the process and device for marking a bag based on preheating laminated films disclosed by the present disclosure, after a first heat-seal layer and a second heat-seal layer are preheated by a first preheating assembly and a second preheating assembly respectively, the first laminated film and the second laminated film are delivered by a conveying assembly to a first heating assembly and a second heating assembly respectively, and then heated by the first heating assembly and the second heating assembly respectively. The present disclosure avoids the low heat transfer efficiency and the difficult improvement of production efficiency caused by the indirect heating of the first heat-seal layer and the second heat-seal layer by the first heating assembly and the second heating assembly.

### BRIEF DESCRIPTION OF THE DRAWINGS

FIG. 1 is a schematic structural diagram of a device for marking a bag based on preheating laminated films in Embodiment 1 of the present disclosure;
FIG. 2 is a flow chart of sample trial in a process for marking a bag based on preheating laminated films in Embodiment 1 of the present disclosure;
FIG. 3 is a schematic structural diagram of a device for marking a bag based on preheating laminated films in Embodiment 2 of the present disclosure; and
FIG. 4 is a schematic structural diagram of a device for marking a bag based on preheating laminated films in Embodiment 3 of the present disclosure.

### Reference numerals:

1. first laminated film, 11. first surface layer, 12. first heat-seal layer,
2. second laminated film, 21. second surface layer, 22. second heat-seal layer,
3. first preheating assembly,
4. second preheating assembly,
5. first heating assembly, 51. first supplemental heating source, 52. first sealing bar,
6. second heating assembly, 61. second supplemental heating source, 62. second sealing bar,
7. first roller,
8. second roller,
A. separation section, B. transition section, C. sealing section,
T1. first preheating temperature,
T2. second preheating temperature,
T3. first heat-sealing initial temperature,
T4. second heat-sealing initial temperature,
T5. first heating temperature,
T6. second heating temperature,
T7. first target temperature,
T8. second target temperature,
T9. melting temperature of the first heat-seal layer,
T10. melting temperature of the second heat-seal layer,
T11. temperature of the first sealing bar, and
T12. temperature of the second sealing bar.

### DETAILED DESCRIPTION

The technical solutions of the embodiments of the present disclosure are clearly and completely described below with reference to the accompanying drawings in the embodiments of the present disclosure. Apparently, the embodiments are merely some rather than all of the embodiments of the present disclosure. All other embodiments obtained by those skilled in the art based on the embodiments of the present disclosure without creative efforts shall fall within the protection scope of the present disclosure.

It should be noted that in the description of the present disclosure, terms such as "central", "longitudinal", "transverse" "upper", "lower", "front", "rear", "left", "right" "vertical", "horizontal", "top", "bottom", "inner", and "outer" indicate orientation or positional relationships based on the accompanying drawings. These terms are merely intended to facilitate and simplify the description of the present disclosure, rather than to indicate or imply that the mentioned device or assembly must have a specific orientation or must be constructed and operated in a specific orientation. Therefore, these terms should not be construed as a limitation to the present disclosure.

In addition, the terms such as "first" and "second" are used in the present disclosure to describe various types of information, but the information should not be limited to these terms, and these terms are only used to distinguish the same type of information from each other. For example, without departing from the scope of the present disclosure, "first" information may be referred to as "second" information, and similarly, "second" information may also be referred to as "first" information.

### Embodiment 1:

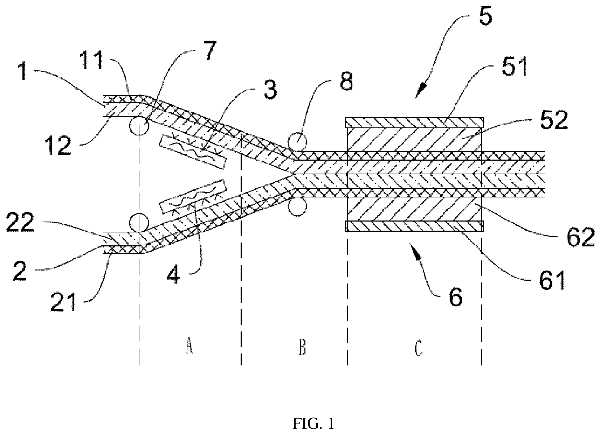

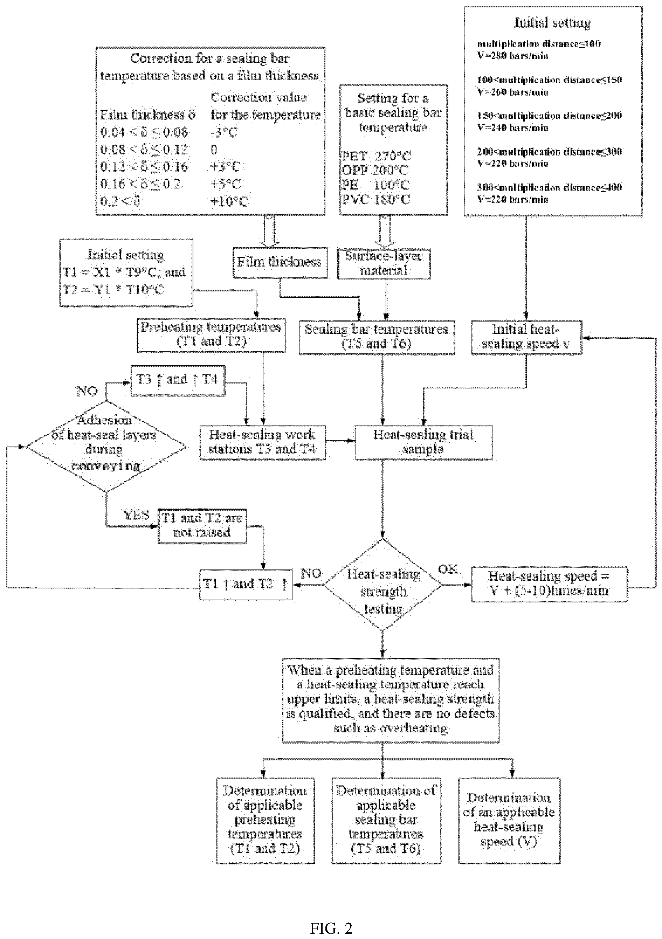

As shown in FIG. 1 and FIG. 2, this embodiment provides a process and a device 100 for marking a bag based on preheating laminated films. The process includes a preheating operation and a heat-sealing operation that are used for combining a first laminated film 1 and a second laminated film 2. The preheating operation is set before the heat-sealing operation. A first preheating assembly 3 and a second preheating assembly 4 are provided between conveying paths of the first laminated film 1 and the second laminated film 2 in the preheating operation. In the preheating operation, heat-seal layers on inner surfaces of the first laminated film 1 and the second laminated film 2 are directly preheated by the first preheating assembly 3 and the second preheating assembly 4 respectively, such that temperatures of the heat-seal layers are close to respective melting temperatures, and initial temperatures of the first laminated film and the second laminated film in the heat-sealing operation are raised. The process includes parameter determination, preheating, conveying, and forming steps.

Parameter determination: A first preheating temperature T1 is determined based on a material of a first heat-seal layer 12 of the first laminated film 1, and a second preheating temperature T2 is determined based on a material of a second heat-seal layer 22 of the second laminated film 2. A first heating temperature T5 is determined based on a material of a first surface layer 11 of the first laminated film 1 and a total thickness of the first laminated film 1, and a second heating temperature T6 is determined based on a material of a second surface layer 21 of the second laminated film 2 and a total thickness of the second laminated film 2. When the first preheating temperature T1 and the second preheating temperature T2 are applied, neither the first heat-seal layer nor the second heat-seal layer melts.

Preheating: In the preheating operation, the first heat-seal layer 12 is heated by the first preheating assembly 3 to the first preheating temperature T1, and the second heat-seal layer 22 is heated by the second preheating assembly 4 to the second preheating temperature T2.

Conveying: The first laminated film 1 and the second laminated film 2 are driven by a conveying assembly to proceed to a position of the heat-sealing operation, and the first laminated film 1 and the second laminated film 2 are allowed to attach to each other under an action of the conveying assembly.

Forming: In the heat-sealing operation, with initial temperatures of the first heat-seal layer 12 and the second heat-seal layer 22 that attach to each other as a first heat-sealing initial temperature T3 and a second heat-sealing initial temperature T4 respectively, the first heat-seal layer 12 and the second heat-seal layer 22 are heated by a first heating assembly 5 and a second heating assembly 6 to a first target temperature T7 and a second target temperature T8 respectively, and the first laminated film 1 and the second laminated film 2 are subjected to heat sealing under a pressure.

After the first heat-seal layer 12 and the second heat-seal layer 22 are preheated by the first preheating assembly 3 and the second preheating assembly 4 respectively, the first laminated film 1 and the second laminated film 2 are delivered by the conveying assembly to the space between the first heating assembly 5 and the second heating assembly 6, and then heated by the first heating assembly 5 and the second heating assembly 6 respectively. The present disclosure avoids the low heat transfer efficiency and the difficult improvement of production efficiency caused by the indirect heating of the first heat-seal layer 12 and the second heat-seal layer 22 by the first heating assembly 5 and the second heating assembly 6.

Preferably, as shown in FIG. 1 and FIG. 2, in some embodiments, between the parameter determination step and the preheating step, the process further includes a step of sample trial:
Sample trial: Under current temperature parameters, a current operating speed v1 of the conveying assembly, a heat transfer time t1 of the first heating assembly 5 for the first laminated film 1, and a heat transfer time t2 of the second heating assembly 6 for the second laminated film 2, the sample trial is conducted. Through the sample trial, it can be confirmed whether a sample produced under the current parameters meets the following requirements: the first heat-seal layer 12 and the second heat-seal layer 22 do not adhere to the conveying assembly, and the first laminated film 1 and the second laminated film 2 have a desired heat-sealing strength and appearance quality.

Preferably, as shown in FIG. 1 and FIG. 2, in some embodiments, between the sample trial step and the preheating step, the process further includes a step of parameter adjustment:
Parameter adjustment: According to a mechanical speed permitted range, an operating speed of the conveying assembly is increased according to the following formula:
v2 = v1 + △v, where v2 is an operating speed of the conveying assembly after an adjustment, v1 is an operating speed of the conveying assembly before the adjustment, and △v is a speed increment per adjustment. After the adjustment, a heat-sealing strength and an appearance quality of a sample are tested. If the heat-sealing strength and the appearance quality meet desired standards, v2 is assigned to v1, and one or more adjustment cycles are conducted.

If the heat-sealing strength or the appearance quality does not meet the desired standard, the first preheating temperature T1 and the second preheating temperature T2 are raised such that the first heat-sealing initial temperature T3 and the second heat-sealing initial temperature T4 are raised to improve the heat-sealing strength and the appearance quality, and the operating speed of the conveying assembly is adjusted to obtain a maximum value of v1. Preferably, in some embodiments, an initial value of the first preheating temperature T1 is set as T1 = X1 * T9 and an initial value of the second preheating temperature T2 is set as T2 = Y1 * T10, where values of X1 and Y1 both are in a range of 0.75 to 0.85, and T9 and T10 are melting temperatures of the materials of the first heat-seal layer 12 and the second heat-seal layer 22 respectively. The first target temperature T7 is X2 * T9 and the second target temperature T8 is Y2 * T10, where values of X2 and Y2 both are in a range of 0.85 to 1.05. If a heat-seal layer adhesion phenomenon occurs during conveying after the first preheating temperature T1 and the second preheating temperature T2 are raised, then values of T1, T2, and v1 before the adjustment are taken.

When the temperature parameters are set at upper limits, the heat transfer efficiency is improved to reduce the heat transfer time. Then, the operating speed of the conveying assembly is adjusted to obtain the maximum value of v1. As a result, the highest working efficiency of the current device in the current working environment will be achieved.

Preferably, as shown in FIG. 1 and FIG. 2, in some embodiments, between the parameter determination step and the preheating step, the process further includes:
When the first heating assembly 5 includes a first supplemental heating source 51 and a first sealing bar 52 and the second heating assembly 6 includes a second supplemental heating source 61 and a second sealing bar 62, a temperature T11 of the first sealing bar is determined based on the material of the first surface layer 11, and a temperature T12 of the second sealing bar is determined based on the material of the second surface layer 21. Correction values △T5 and △T6 for the first sealing bar 52 and the second sealing bar 62 are determined based on the total thickness of the first laminated film 1 and the total thickness of the second laminated film 2 respectively. A set temperature for the first sealing bar 52 is the first heating temperature T5, and T5 = T11 + △T5. A set temperature for the second sealing bar 62 is the second heating temperature T6, and T6 = T12 + △T6.

Preferably, in some embodiments, an initial operating speed v1 of the conveying assembly is negatively correlated with a bag length and a multiplication distance.

Preferably, as shown in FIG. 1 and FIG. 2, in some embodiments, the first preheating temperature T1 and the second preheating temperature T2 are automatically controlled in one of the following three modes:
Mode 1: The first preheating temperature T1, the second preheating temperature T2, the first heating temperature T5, and the second heating temperature T6 are controlled independently.
Mode 2: The first preheating temperature T1 and the first heating temperature T5 are controlled in a coordinated manner, and the second preheating temperature T2 and the second heating temperature T6 are controlled in a coordinated manner.
Mode 3: The first preheating temperature T1, the second preheating temperature T2, the first heating temperature T5, and the second heating temperature T6 are all controlled in a coordinated manner.

In some embodiments, the first heat-seal layer 12 and the second heat-seal layer 22 are made of a same material, such that the first preheating temperature T1 and the second preheating temperature T2 are the same value and the first heating temperature T5 and the second heating temperature T6 are the same value. When the mode 2 or the mode 3 is adopted, the operation procedures for operators during use can be reduced. Preferably, in some embodiments, when the first heat-seal layer 12 and the second heat-seal layer 22 each are made of a polyethylene (PE)-based material, T5 = T6 = 100°C. When the first heat-seal layer 12 and the second heat-seal layer 22 each are made of a cast polypropylene (CPP)-based material, T5 = T6 = 160°C. When the first heat-seal layer 12 and the second heat-seal layer 22 are not made of a same material, operators can adopt the mode 1 to handle the production under the circumstance.

This embodiment provides a device for marking a bag based on preheating laminated films, including the first preheating assembly 3, the second preheating assembly 4, the first heating assembly 5, the second heating assembly 6, and the conveying assembly described above. A first laminated film 1 and a second laminated film 2 each are provided with a separation section A, a transition section B, and a sealing section C sequentially along an extending direction of an advancing direction of the conveying assembly.

The first preheating assembly 3 is arranged at a separation section A of the first laminated film 1, and the second preheating assembly 4 is arranged at a separation section A of the second laminated film 2. The first heating assembly 5 is arranged at a side of a sealing section C of a first surface layer 11 that is away from a first heat-seal layer 12, and the second heating assembly 6 is arranged at a side of a sealing section C of a second surface layer 21 that is away from a second heat-seal layer 22.

Preferably, as shown in FIG. 1, in some embodiments, the conveying assembly includes at least two first rollers 7 and at least two second rollers 8. The at least two first rollers 7 are arranged at opposite sides (i.e., facing each other) of the separation sections A of the first laminated film 1 and the second laminated film 2 respectively. The at least two second rollers 8 are arranged at outer sides of transition sections B of the first surface layer 11 and the second surface layer 21 respectively. The first laminated film 1 and the second laminated film 2 can be limited through the first rollers 7 and the second rollers 8, so as to allow the formation of the separation section A, the transition section B, and the sealing section C while driving the movement of the first laminated film 1 and the second laminated film 2.

Preferably, as shown in FIG. 1, in some embodiments, the first preheating assembly 3 is arranged at a side of the first heat-seal layer 12 that is away from the first surface layer 11, and the second preheating assembly 4 is arranged at a side of the second heat-seal layer 22 that is away from the second surface layer 21. The first heat-seal layer 12 and the second heat-seal layer 22 are directly heated by the first preheating assembly 3 and the second preheating assembly 4 through electric heating respectively, which can ensure an accuracy of heating for the first heat-seal layer 12 and the second heat-seal layer 22.

### Embodiment 2:

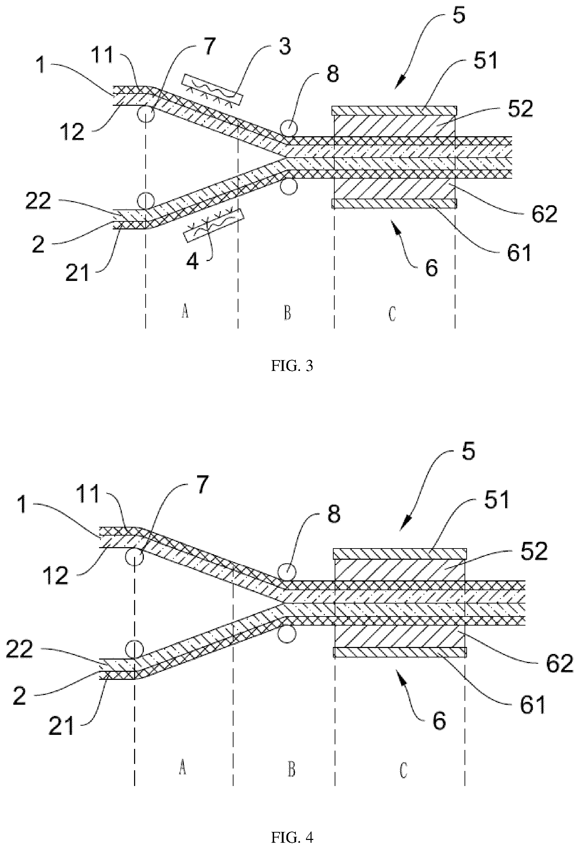

Preferably, as shown in FIG. 3, in this embodiment, the first preheating assembly 3 is arranged at a side of the first surface layer 11 that is away from the first heat-seal layer 12, and the second preheating assembly 4 is arranged at a side of the second surface layer 21 that is away from the second heat-seal layer 22. The first heat-seal layer 12 and the second heat-seal layer 22 are indirectly heated by heating the first surface layer 11 and the second surface layer 21 respectively, which can reduce a power required by the first heating assembly 5 and the second heating assembly 6.

### Embodiment 3:

Preferably, as shown in FIG. 4, in this embodiment, the first preheating assembly 3 and the second preheating assembly 4 are arranged at outer peripheral sides of the first rollers 7 and the second rollers 8 respectively. The first roller 7 and the second roller 8 attach to the first heat-seal layer 12 through the first preheating assembly 3, and the first roller 7 and the second roller 8 attach to the second heat-seal layer 22 through the second preheating assembly 4. Heat sources for the first preheating assembly 3 and the second preheating assembly 4 are high-temperature liquids. The first preheating assembly 3 and the second preheating assembly 4 are arranged at the first rollers 7 and the second rollers 8 respectively, such that the first laminated film 1 and the second laminated film 2 can be heated while moving, which improves the working efficiency.

In another embodiment, the above process can also be applied to a multilayer laminated film with one or more intermediate layers between the first heat-seal layer 12 and the first surface layer 11. In this case, a total thickness of the first laminated film is a sum of thicknesses of the intermediate layer, the first heat-seal layer 12, and the first surface layer 11.

When the process and device for marking a bag based on preheating laminated films are in use in one embodiment, the case where a material of the first laminated film is different from a material of the second laminated film is taken as an example:
A first preheating temperature T1 is determined based on a material of a first heat-seal layer 12 of the first laminated film 1, and a second preheating temperature T2 is determined based on a material of a second heat-seal layer 22 of the second laminated film 2. A first heat-sealing initial temperature T3 and a second heat-sealing initial temperature T4 are set. A first heating temperature T5 is determined based on a material of a first surface layer 11 of the first laminated film 1 and a total thickness of the first laminated film 1, and a second heating temperature T6 is determined based on a material of a second surface layer 21 of the second laminated film 2 and a total thickness of the second laminated film 2. A temperature of the first heating assembly 5 may be set as a first target temperature T7, and a temperature of the second heating assembly 6 may be set as a second target temperature T8.

Under current temperature parameters, a current operating speed v1 of the conveying assembly, a heat transfer time t1 of the first heating assembly 5 for the first laminated film 1, and a heat transfer time t2 of the second heating assembly 6 for the second laminated film 2, the sample trial is conducted. Through the sample trial, it can be confirmed whether a sample produced under the current parameters meets the following requirements: the first heat-seal layer 12 and the second heat-seal layer 22 do not adhere to the conveying assembly, and the first laminated film 1 and the second laminated film 2 have a desired heat-sealing strength and appearance quality.

According to a mechanical speed permitted range, an operating speed is increased at an increment of (5-10) times/min. After an adjustment, a heat-sealing strength and an appearance quality are tested. If the heat-sealing strength or the appearance quality does not meet a desired standard, the first preheating temperature T1 and the second preheating temperature T2 are raised such that the first heat-sealing initial temperature T3 and the second heat-sealing initial temperature T4 are raised to improve the heat-sealing strength and the appearance quality, and the operating speed of the conveying assembly is adjusted to obtain a maximum value of v1. An initial value of the first preheating temperature T1 is set as T1 = (0.75 - 0.85) * T9 and an initial value of the second preheating temperature T2 is set as T2 = (0.75 - 0.85) * T10, where T9 and T10 are melting temperatures of the materials of the first heat-seal layer 12 and the second heat-seal layer 22 respectively. The first target temperature T7 is (0.85-1.05) * T9, and the second target temperature T8 is (0.85-1.05) * T10. If a heat-seal layer adhesion phenomenon occurs during conveying after the first preheating temperature T1 and the second preheating temperature T2 are raised, then values of T1, T2, and v1 before the adjustment are taken.

After the debugging is completed, the first heat-seal layer 12 is heated by the first preheating assembly 3 to the first preheating temperature T1, and the second heat-seal layer 22 is heated by the second preheating assembly 4 to the second preheating temperature T2. The first laminated film 1 and the second laminated film 2 are driven by the conveying assembly to move, and the first laminated film 1 and the second laminated film 2 are allowed to attach to each other under an action of the second rollers 8. The first heat-seal layer of the first laminated film 1 and the second heat-seal layer of the second laminated film 2 that attach to each other are heated by the first heating assembly 5 and the second heating assembly 6 to the first target temperature T7 and the second target temperature T8 respectively, and the first laminated film 1 and the second laminated film 2 are subjected to heat sealing under a pressure. In this way, the process for making a laminated film bag is completed. This process avoids the low heat transfer efficiency and the difficult improvement of production efficiency caused by the indirect heating of the first heat-seal layer 12 and the second heat-seal layer 22 by the first heating assembly 5 and the second heating assembly 6.

The above are preferred embodiments of the present disclosure, and it should be noted that various improvements and modifications can be made by those of ordinary skill in the art without departing from the principles of the present disclosure. These improvements and modifications should also be regarded as falling into the protection scope of the present disclosure.

## Claims

1. A process for marking a bag based on preheating laminated films, comprising: a preheating operation and a heat-sealing operation that are used for combining a first laminated film and a second laminated film,
wherein the preheating operation is set before the heat-sealing operation; a first preheating assembly and a second preheating assembly are provided between conveying paths of the first laminated film and the second laminated film in the preheating operation; and in the preheating operation, heat-seal layers on inner surfaces of the first laminated film and the second laminated film are preheated by the first preheating assembly and the second preheating assembly respectively to raise initial temperatures of the first laminated film and the second laminated film in the heat-sealing operation; and
wherein the process comprises the following steps:
parameter determination: determining a first preheating temperature T1 based on a material of a first heat-seal layer of the first laminated film, and determining a second preheating temperature T2 based on a material of a second heat-seal layer of the second laminated film; and determining a first heating temperature T5 based on a material of a first surface layer of the first laminated film and a total thickness of the first laminated film, and determining a second heating temperature T6 based on a material of a second surface layer of the second laminated film and a total thickness of the second laminated film, wherein when the first preheating temperature T1 and the second preheating temperature T2 are applied, neither the first heat-seal layer nor the second heat-seal layer undergoes melting;
preheating: in the preheating operation, heating the first heat-seal layer by the first preheating assembly to the first preheating temperature T1, and heating the second heat-seal layer by the second preheating assembly to the second preheating temperature T2;
conveying: driving the first laminated film and the second laminated film by a conveying assembly to proceed to a position of the heat-sealing operation, and making the first laminated film and the second laminated film attach to each other under an action of the conveying assembly; and
forming: in the heat-sealing operation, with initial temperatures of the first heat-seal layer and the second heat-seal layer that attach to each other as a first heat-sealing initial temperature T3 and a second heat-sealing initial temperature T4 respectively, heating the first heat-seal layer and the second heat-seal layer by a first heating assembly and a second heating assembly to a first target temperature T7 and a second target temperature T8 respectively, and subjecting the first laminated film and the second laminated film to heat sealing under a pressure.

2. The process for marking a bag based on preheating laminated films according to claim 1, wherein between the parameter determination step and the preheating step, the process further comprises the following step:
sample trial: under current temperature parameters, a current operating speed v1 of the conveying assembly, a heat transfer time t1 of the first heating assembly for the first laminated film, and a heat transfer time t2 of the second heating assembly for the second laminated film, conducting the sample trial.

3. The process for marking a bag based on preheating laminated films according to claim 2, wherein between the sample trial step and the preheating step, the process further comprises the following step:
parameter adjustment: according to a mechanical speed permitted range, increasing an operating speed of the conveying assembly according to the following formula:
v2 = v1 + △v, wherein v2 is an operating speed of the conveying assembly after an adjustment, v1 is an operating speed of the conveying assembly before the adjustment, and △v is a speed increment per adjustment; after the adjustment, testing a heat-sealing strength and an appearance quality of a sample; if both the heat-sealing strength and the appearance quality meet desired standards, assigning v2 to v1, and conducting one or more adjustment cycles;
if the heat-sealing strength or the appearance quality does not meet the desired standard, raising the first preheating temperature T1 and the second preheating temperature T2 such that the first heat-sealing initial temperature T3 and the second heat-sealing initial temperature T4 are raised to improve the heat-sealing strength and the appearance quality, and adjusting the operating speed of the conveying assembly to obtain a maximum value of v1; and
if that a heat-seal layer adhesion phenomenon occurs during conveying after raising the first preheating temperature T1 and the second preheating temperature T2, taking values of T1, T2, and v1 before the adjustment.

4. The process for marking a bag based on preheating laminated films according to claim 3, wherein an initial value of the first preheating temperature T1 is set as T1 = X1 * T9 and an initial value of the second preheating temperature T2 is set as T2 = Y1 * T10, wherein values of X1 and Y1 both are in a range of 0.75 to 0.85, and T9 and T10 are melting temperatures of the materials of the first heat-seal layer and the second heat-seal layer respectively; and the first target temperature T7 is X2 * T9 and the second target temperature T8 is Y2 * T10, wherein values of X2 and Y2 both are in a range of 0.85 to 1.05.

5. The process for marking a bag based on preheating laminated films according to claim 4, wherein between the parameter determination step and the preheating step, the process further comprises:
the first heating assembly comprising a first supplemental heating source and a first sealing bar, and the second heating assembly comprising a second supplemental heating source and a second sealing bar; determining a temperature T11 of the first sealing bar based on the material of the first surface layer, and determining a temperature T12 of the second sealing bar based on the material of the second surface layer; and determining correction values △T5 and △T6 for the first sealing bar and the second sealing bar based on the total thickness of the first laminated film and the total thickness of the second laminated film respectively, wherein a set temperature for the first sealing bar is the first heating temperature T5, and T5 = T11 + △T5; and a set temperature for the second sealing bar is the second heating temperature T6, and T6 = T12 + △T6.

6. The process for marking a bag based on preheating laminated films according to claim 3, wherein an initial operating speed v1 of the conveying assembly is negatively correlated with a bag length and a multiplication distance.

7. The process for marking a bag based on preheating laminated films according to claim 1, wherein the first preheating temperature T1 and the second preheating temperature T2 are automatically controlled in one of the following three modes:
mode 1: the first preheating temperature T1, the second preheating temperature T2, the first heating temperature T5, and the second heating temperature T6 are controlled independently;
mode 2: the first preheating temperature T1 and the first heating temperature T5 are controlled in a coordinated manner, and the second preheating temperature T2 and the second heating temperature T6 are controlled in a coordinated manner; and
mode 3: the first preheating temperature T1, the second preheating temperature T2, the first heating temperature T5, and the second heating temperature T6 are all controlled in a coordinated manner.

8. A device for marking a bag based on preheating laminated films, comprising the first preheating assembly, the second preheating assembly, the first heating assembly, the second heating assembly, and the conveying assembly according to any one of claims 1 to 7, wherein a first laminated film and a second laminated film each are provided with a separation section, a transition section, and a sealing section sequentially along an extending direction of an advancing direction of the conveying assembly;
the first preheating assembly is arranged at a separation section of the first laminated film, and the second preheating assembly is arranged at a separation section of the second laminated film; and the first heating assembly is arranged at a side of a sealing section of a first surface layer of the first laminated film that is away from a first heat-seal layer, and the second heating assembly is arranged at a side of a sealing section of a second surface layer of the second laminated film that is away from a second heat-seal layer.

9. The device for marking a bag based on preheating laminated films according to claim 8, wherein the conveying assembly comprises at least two first rollers and at least two second rollers; the at least two first rollers are arranged at opposite sides of the separation sections of the first laminated film and the second laminated film respectively; and the at least two second rollers are arranged at outer sides of transition sections of the first surface layer and the second surface layer respectively.
